# EUROPEAN PATENT APPLICATION

(11) **EP 4 603 609 A1**
(43) Date of publication of application: **20.08.2025**
(21) Application number: 23754694.0
(22) Date of filing: 24.05.2023
(51) Int. Cl.: C22B 3/00, C22B 7/02, C22B 19/28

(54) **METHOD FOR REMOVING HALIDES FROM WAELZ OXIDE**

(30) Priority: 14.10.2022 KR 20220132507
(71) Applicant: Korea Zinc Co., Ltd., Seoul 06110 (KR)
(72) Inventor: CHOI, Heon Sik, 542 Seoul (KR); JOO, Jae Hoon, 542 Seoul (KR)
(74) Representative: Angerhausen, Christoph
(86) International application number: PCT/KR2023/007052
(87) International publication number: WO 2023/234623

(57) **Abstract**

The present disclosure relates to a method for removing halide from halide-containing Waelz oxide. According to the method, it is possible to effectively remove halide contained in Waelz oxide, especially insoluble fluoride such as CaF₂, which are difficult to remove under atmospheric pressure conditions and present as insoluble substances. Accordingly, in the process of recovering valuable metals, an additional process for adjusting the concentration of fluorine or chlorine present in the electrolyte can be omitted, and costs can be reduced.

## Description

### TECHNICAL FIELD

The present disclosure relates to a method for removing halide from halide-containing Waelz oxide. The present disclosure relates to a method for recovering a valuable metal from a halide-free Waelz oxide cake.

### BACKGROUND

The Waelz Process refers to a method of obtaining an oxide cake from steel mill waste such as electric arc furnace dust or other recycled materials using a rotary kiln called a Waelz kiln. The oxide obtained in this process is called Waelz oxide and usually contains a significant amount of concentrated zinc or other valuable metals.

A valuable metal recovery process (e.g., zinc recovery process) using a raw material such as Waelz oxide goes through a leaching process performed in acid such as sulfuric acid and an electrolysis process using a leached solution as an electrolyte. In order for such a raw material to be directly used for the purpose of recovering valuable metals in the electrolytic process, the contents of fluorine (F) and chlorine (Cl) in the raw material should not be high. This is because when these components accumulate in the electrolyte, there may be posed problems such as corrosion of an electrode and decrease in current efficiency. When Waelz oxide is used as a raw material in a valuable metal recovery process, this raw material contains halide, especially fluoride such as PbF₂ or ZnF₂, which are carried over from steelmaking furnace dust or contained in the raw material during the production of Waelz oxide. Since such fluoride reacts with CaO in a Waelz oxide production process to generate CaF₂, which is insoluble fluoride. This poses a problem that CaF₂ should be removed in a subsequent process. In order to solve this problem, various methods for removing halide present in Waelz oxide have been used.

Such methods include an atmospheric alkali washing process in which halide is removed by using soda ash (Na₂CO₃) under atmospheric pressure conditions, a selective fluorine precipitation process in which fluorine (F) is selectively precipitated by introducing CaCO₃, Ca(OH)₂, and aluminum sulfate (Al₂(SO₄)₃) into a Waelz oxide solution, and the like.

In the case of the atmospheric alkali washing process, the removal rate of chlorine (Cl) present in a water-soluble form is over 99%. However, fluorine is present as insoluble CaF₂, posing a problem in that the removal rate of fluorine is only about 69% even when 300 kg of soda ash is introduced per ton of raw material.

In the selective fluorine precipitation process, a cake obtained by alkali-washing Waelz oxide under an atmospheric pressure condition is leached in a zinc spent electrolyte and then CaCO₃, Ca(OH)₂, and aluminum sulfate are introduced to selectively precipitate fluorine. Therefore, it is possible to remove fluoride up to about 56 mg/L. However, there is a problem in that a large amount of gypsum (CaSO₄) is generated due to the introduction of CaCO₃, Ca(OH)₂, and aluminum sulfate.

### SUMMARY

The present disclosure was made to solve the above problems. It is an object of the present disclosure is to increase the removal rate of fluorine removed from Waelz oxide.

Another object of the present disclosure is to solve a problem that a large amount of gypsum is generated during the treatment of Waelz oxide.

A further object of the present disclosure is to provide a method for removing halide from Waelz oxide by a pressurized alkali washing technique using an autoclave.

According to one embodiment, there is provided a method for removing halide from halide-containing Waelz oxide, including: a pressurized alkali washing step of removing halide by heating a Waelz oxide cake containing Waelz oxide together with alkali under pressurized conditions.

According to the method of one embodiment of the present disclosure, halide, especially insoluble fluoride (F), which is difficult to remove in an atmospheric alkali washing step, in a Waelz oxide, can be removed under pressurized conditions using an autoclave through the pressurized alkali washing step.

In one embodiment, the method may further include: a repulping step of removing halide by agitating a cake obtained from the pressurized alkali washing step together with water. Through this step, residual water-soluble halide remaining in the cake obtained from the pressurized alkali washing step can be removed with water.

In one embodiment, the alkali used in the pressurized alkali washing step may be soda ash or caustic soda.

In one embodiment, an amount of the soda ash may be 100 kg to 300 kg per ton of the Waelz oxide cake.

In one embodiment, a pressure used in the pressurized alkali washing step may be 2 to 3 atm.

In one embodiment, in the pressurized alkali washing step, a reaction temperature may be 140 °C to 160 °C.

In one embodiment, the pressurized alkali washing step may be performed for 1 hour to 3 hours.

In one embodiment, the repulping step may be carried out by agitating the cake together with water at 50 °C to 70 °C.

In one embodiment, the repulping step may be performed for 1 hour to 2 hours.

In one embodiment, the halide may be at least one of fluorine and chlorine.

In one embodiment, the pressurized alkali washing step may be performed in an autoclave.

In one embodiment, the method may further include: a repulped cake recovery step of recovering a de-halogenated cake from the repulping step.

According to one embodiment, there is provided a method for recovering a valuable metal from Waelz oxide, including: (1) a pressurized alkali washing step of heating a cake containing Waelz oxide together with alkali under pressurized conditions; (2) a repulping step of agitating the cake obtained from the pressurized alkali washing step with water; (3) a repulped cake recovery step of recovering a cake obtained from the repulping step; and (4) a step of recovering a valuable metal through an acid leaching process and an electrolysis process.

In one embodiment, the valuable metal may be zinc, lead, iron, or copper.

According to the method of one embodiment of the present disclosure, the removal rate of halide contained in Waelz oxide can be increased, and the amount of additives used can be reduced as the reaction is performed under pressurized conditions. Further, according to the method of one embodiment of the present disclosure, unlike the atmospheric alkali washing process, a process for additionally removing fluorine is not required, and by-products such as gypsum are not generated. This makes it possible to reduce the cost for treating by-products.

According to the method of one embodiment of the present disclosure, it is possible to effectively remove halide contained in Waelz oxide, especially insoluble fluoride such as CaF₂, which are difficult to remove under atmospheric pressure conditions and present as insoluble substances. Accordingly, in the process of recovering valuable metals, an additional process for adjusting the concentration of fluorine or chlorine present in the electrolyte can be omitted, and costs can be reduced.

### BRIEF DESCRIPTION OF THE DRAWINGS

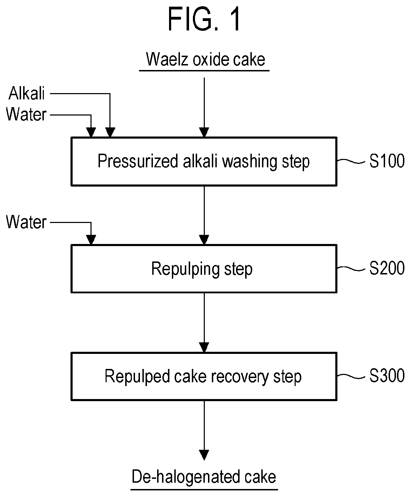

FIG. 1 is a diagram illustrating an example of a method for removing halide according to an embodiment of the present disclosure.

### DETAILED DESCRIPTION

Various embodiments or examples described herein are illustrated for the purpose of clearly explaining the technical scope of the present disclosure, and are not intended to be limited to specific embodiments. The technical idea of the present disclosure includes various modifications, equivalents, substitutes for each embodiment or examples described herein, and embodiments or examples that are selectively combined from all or part of the respective embodiments or examples.

One embodiment of the present disclosure relates to a method for removing halide from halide-containing Waelz oxide.

As used herein, the term "Waelz oxide" generally refers to the main product of a Waelz process or a Waelz method. As used herein, the term "Waelz process" or "Waelz method" generally means a metallurgical process for reprocessing a zinc-containing residual material, such as zinc-containing electric arc furnace dust, in a rotary kiln or a rotary furnace. In the present disclosure, Waelz oxide may contain zinc oxide (ZnO) as a main component. In the present disclosure, Waelz oxide may contain lead, iron, copper, or oxides thereof. In addition, the Waelz oxide may generally contain halide such as fluorine (e.g., fluorine or fluoride) or chlorine, and may additionally contain other hazardous contaminants such as lead and the like.

In one embodiment, the method for removing halide includes a pressurized alkali washing step S100 of removing halide by heating a cake containing Waelz oxide together with alkali under pressurized conditions. In one embodiment, the pressurized alkali washing step S100 may be performed by agitating a Waelz oxide cake containing Waelz oxide together with alkali. The pressurized alkali washing step S100 is a step of removing in advance halide which is difficult to remove under an atmospheric alkali washing condition. In particular, about 90% or more of fluorine such as CaF₂ or the like present in Waelz oxide in an insoluble state can be removed or purified in the pressurized alkali washing step S100. The principle by which the pressurized alkali washing step S100 is performed is shown in the reaction formula below.

[Reaction Formula] CaF₂ + Na₂CO₃ = 2NaF + CaCO₃

In one embodiment, the alkali may be soda ash or caustic soda. Soda ash means sodium carbonate (Na₂CO₃), and may be sodium carbonate anhydrous. Caustic soda means sodium hydroxide (NaOH). In one embodiment, the alkali may be introduced in the process at an amount of 100 kg to 300 kg per ton of a cake comprising Waelz oxide. In addition, the amount of alkali introduced in the process may preferably be 120 kg to 250 kg, more preferably 150 kg to 200 kg per ton of a Waelz oxide cake.

In one embodiment, a pressure used in the pressurized alkali washing step S100 may be 2 to 3 atm.

In one embodiment, the reaction temperature in the pressurized alkali washing step S100 may be performed at 140 °C to 160 °C.

In one embodiment, the pressurized alkali washing step S100 may be executed for 1 hour to 3 hours. In addition, the execution time may be preferably 1.5 hours to 3 hours, more preferably 2 hours to 3 hours.

In one embodiment, the method for removing halide may further include a repulping step S200 of removing halide by agitating the cake obtained from the pressurized alkali washing step S100 with water. The repulping step S200 is a process of removing or purifying water-soluble halide that is not removed in the pressurized alkali washing step S100 but remains in the cake.

In one embodiment, the repulping step S200 may be performed by agitating with water at 50 °C to 70 °C. In addition, the temperature may be preferably 55 °C to 70 °C, more preferably 60 °C to 70 °C.

In one embodiment, the repulping step S200 may be performed for 1 hour to 2 hours. The time may be preferably 1.5 to 2 hours.

In each embodiment, if the conditions (e.g., alkali dose, pressure, temperature, or time) for performing the process in the pressurized alkali washing step S100 or the repulping step S200 are less than the minimum values, the halide may not be sufficiently removed. If the conditions are larger than the maximum values, the efficiency or economics of the process may be adversely affected.

In one embodiment, the halide may be fluorine and/or chlorine. The halide contained in Waelz oxide may be present in various forms, and any form in which fluorine and/or chlorine atoms may be included as a compound may be used without limitation.

In one embodiment, the pressurized alkali washing step S100 may be performed in an autoclave. The autoclave may be a vertical autoclave or a horizontal autoclave. The vertical autoclave may include an inlet through which a process solution is introduced, an outlet through which the process solution is discharged, an oxygen injection port through which oxygen is supplied to the process solution, an agitator for mixing the process solution, an outer shell, an acid-resistant brick layer, an acid-resistant metal layer, and a cap ring.

In one embodiment, the method for removing halide may further include a repulped cake recovery step S300 of recovering the de-halogenated cake from the repulping step S200.

One embodiment of the present disclosure may be directed to a method for recovering a valuable metal from Waelz oxide, including: (1) a pressurized alkali washing step S 100 of heating a cake containing Waelz oxide together with alkali under pressurized conditions; (2) a repulping step S200 of agitating the cake obtained from the pressurized alkali washing step S100 with water; (3) a repulped cake recovery step S300 of recovering the cake obtained from the repulping step S200; and (4) a step of recovering a valuable metal through an acid leaching process and an electrolysis process. In one embodiment, the valuable metal may be zinc, lead, iron, or copper.

Hereinafter, the configuration and effects of the present disclosure will be described in more detail by using examples. However, the examples are provided only for illustrative purposes to aid understanding of the present disclosure, and the scope of the present disclosure are not limited by the following examples.

### [Example 1]

Waelz Oxide containing 0.25% of fluorine and 7.55% of chlorine was used as a raw material. In the pressurized alkali washing step, 180 g/L of raw material was mixed with water, and soda ash (Na₂CO₃) was introduced at 120 kg per ton of Waelz oxide. The mixture thus prepared was heated to 140 °C inside an autoclave and reacted while agitating for 2 hours.

A cake was obtained from the pressurized alkali washing step S100. In the repulping step S200, the obtained cake was mixed with water at 60 °C in an amount of 150 g/L and stirred for 2 hours. Then, halide was removed.

The contents of fluorine and chlorine contained in the cake obtained after the pressurized alkali washing step and the cake obtained in the repulping step were measured using a combustion ion chromatography system (Model name: AQF-2100H manufactured by Thermo Fisher Scientific Solutions LLC).

### [Example 2]

The experiment was conducted in the same manner as in Example 1 except that the amount of soda ash introduced in the pressurized alkali washing step was adjusted to 150 kg per ton of the cake introduced.

### [Example 3]

The experiment was conducted in the same manner as in Example 1 except that the amount of soda ash introduced in the pressurized alkali washing step was adjusted to 200 kg per ton of the cake introduced.

### [Example 4]

The experiment was conducted in the same manner as in Example 1 except that the reaction temperature was adjusted to 150 °C in the pressurized alkali washing step.

### [Example 5]

The experiment was performed in the same manner as in Example 1 except that the reaction temperature was adjusted to 150 °C in the pressurized alkali washing step and the amount of soda ash introduced was adjusted to 150 kg per 1 ton of the cake.

### [Example 6]

The experiment was performed in the same manner as in Example 1 except that the reaction temperature was adjusted to 150 °C in the pressurized alkali washing step and the amount of soda ash introduced was adjusted to 200 kg per 1 ton of the cake.

### [Example 7]

The experiment was conducted in the same manner as in Example 1 except that the reaction temperature was adjusted to 160 °C in the pressurized alkali washing step.

### [Example 8]

The experiment was performed in the same manner as in Example 1 except that the reaction temperature was adjusted to 160 °C in the pressurized alkali washing step and the amount of soda ash introduced was adjusted to 150 kg per 1 ton of the cake.

### [Example 9]

The experiment was performed in the same manner as in Example 1 except that the reaction temperature was adjusted to 160 °C in the pressurized alkali washing step and the amount of soda ash introduced was adjusted to 200 kg per 1 ton of the cake.

### [Comparative Example 1]

The experiment was conducted in the same manner as in Example 1 except that the reaction temperature was adjusted to 80 °C under atmospheric pressure conditions in an alkali washing step and the amount of soda ash introduced was adjusted to 150 kg per 1 ton of the cake.

### [Comparative Example 2]

The experiment was conducted in the same manner as in Example 1 except that the reaction temperature was adjusted to 85 °C under atmospheric pressure conditions in an alkali washing step and the amount of soda ash introduced was adjusted to 150 kg per 1 ton of the cake.

### [Comparative Example 3]

The experiment was conducted in the same manner as in Example 1 except that the reaction temperature was adjusted to 90 °C under atmospheric pressure conditions in an alkali washing step and the amount of soda ash introduced was adjusted to 150 kg per 1 ton of the cake.

### [Comparative Example 4]

The experiment was conducted in the same manner as in Example 1 except that the reaction temperature was adjusted to 95 °C under atmospheric pressure conditions in an alkali washing step and the amount of soda ash introduced was adjusted to 150 kg per 1 ton of the cake.

The reaction conditions of the Examples and Comparative Examples and the contents of fluorine and chlorine present in the cake are shown in Table 1 below.

**[Table 1]**

| | Alkali washing reaction temperature (°C) | Amount of Soda ash (kg/1 ton of cake) | Alkali washed cake quality (%) | | Repulped cake quality (%) | |
|---|---|---|---|---|---|---|
| | | | Fluorine (F) | Chlorine (Cl) | Fluorine (F) | Chlorine (Cl) |
| Ex. 1 | 140 | 120 | 0.044 | 0.218 | 0.037 | 0.020 |
| Ex. 2 | 140 | 150 | 0.032 | 0.146 | 0.033 | 0.024 |
| Ex. 3 | 140 | 200 | 0.031 | 0.162 | 0.029 | 0.024 |
| Ex. 4 | 150 | 120 | 0.038 | 0.176 | 0.029 | 0.028 |
| Ex. 5 | 150 | 150 | 0.031 | 0.150 | 0.031 | 0.029 |
| Ex. 6 | 150 | 200 | 0.030 | 0.130 | 0.024 | 0.023 |
| Ex. 7 | 160 | 120 | 0.031 | 0.185 | 0.028 | 0.023 |
| Ex. 8 | 160 | 150 | 0.031 | 0.183 | 0.025 | 0.021 |
| Ex. 9 | 160 | 200 | 0.029 | 0.163 | 0.024 | 0.023 |
| Com. Ex. 1 | 80 | 150 | 0.134 | 0.061 | 0.128 | 0.057 |
| Com. Ex. 2 | 85 | 150 | 0.132 | 0.062 | 0.127 | 0.057 |
| Com. Ex. 3 | 90 | 150 | 0.133 | 0.058 | 0.122 | 0.055 |
| Com. Ex. 4 | 95 | 150 | 0.133 | 0.055 | 0.126 | 0.054 |

As can be seen in Table 1, when the pressurized alkali washing step was performed according to one embodiment of the present disclosure, the content of fluorine present in Waelz oxide was reduced by at least approximately 80%. On the other hand, when the alkali washing step was performed under atmospheric pressure conditions, the content of fluorine present in Waelz oxide was reduced by approximately 50%, which indicates that the conventional process cannot effectively remove fluorine present as insoluble CaF₂. In addition, when the repulping step is performed after the pressurized alkali washing step according to one embodiment of the present disclosure, it can be confirmed that the fluorine content is further reduced. In addition, as can be noted in Table 1, when the repulping step is performed after the pressurized alkali washing step according to one embodiment of the present disclosure, the final chlorine content was reduced by at least 80% as compared with that of the alkali washed cake. On the other hand, when the alkali washing step and the repulping step were performed under atmospheric pressure conditions, the final chlorine content was hardly reduced as compared with the alkali washed cake.

Finally, in the method according to one embodiment of the present disclosure, it is possible to remove about 85% to about 90% of fluorine from Waelz oxide, which is a raw material, and about 99% of chlorine. These results indicate that the method according to one embodiment of the present disclosure can remarkably and effectively remove halide included in Waelz oxide.

Although the technical scope of the present disclosure has been described by the examples described in some embodiments and illustrated in the accompanying drawings, it should be noted that various substitutions, modifications, and changes can be made without departing from the scope of the present disclosure which can be understood by those skilled in the art to which the present disclosure pertains. In addition, it should be noted that that such substitutions, modifications and changes are intended to fall within the scope of the appended claims.

## Claims

1. A method for removing halide from halide-containing Waelz oxide, comprising:
a pressurized alkali washing step of removing halide by heating a Waelz oxide cake containing Waelz oxide together with alkali under pressurized conditions.

2. The method of claim 1, further comprising:
a repulping step of removing halide by agitating a cake obtained from the pressurized alkali washing step together with water.

3. The method of claim 1 or 2, wherein the alkali used in the pressurized alkali washing step is soda ash or caustic soda.

4. The method of claim 3, wherein an amount of the soda ash is 100 kg to 300 kg per ton of the Waelz oxide cake.

5. The method of claim 1 or 2, wherein a pressure used in the pressurized alkali washing step is 2 to 3 atm.

6. The method of claim 1, wherein in the pressurized alkali washing step, a reaction temperature is 140 °C to 160 °C.

7. The method of claim 2, wherein the repulping step is carried out by agitating the cake together with water at 50 °C to 70 °C.

8. The method of claim 2, further comprising:
a repulped cake recovery step of recovering a de-halogenated cake from the repulping step.

9. A method for recovering a valuable metal from Waelz oxide, comprising:
(1) a pressurized alkali washing step of heating a cake containing Waelz oxide together with alkali under pressurized conditions;
(2) a repulping step of agitating the cake obtained from the pressurized alkali washing step with water;
(3) a repulped cake recovery step of recovering a cake obtained from the repulping step; and
(4) a step of recovering a valuable metal through an acid leaching process and an electrolysis process.

10. The method of claim 9, wherein the valuable metal is zinc, lead, iron, or copper.
